Europäisches Patentamt

European Patent Office

Office européen des brevets

(19)

(11) Publication number: **0 101 726**
**B1**

(12) **EUROPEAN PATENT SPECIFICATION**

(45) Date of publication of patent specification: **14.01.87**

(51) Int. Cl.⁴: **G 01 P 15/08, G 01 B 9/02**

(21) Application number: **83901085.7**

(22) Date of filing: **24.02.83**

(86) International application number:
**PCT/GB83/00055**

(87) International publication number:
**WO 83/03010 01.09.83 Gazette 83/20**

(54) **OPTICAL DISPLACEMENT SENSING APPARATUS.**

(30) Priority: **24.02.82 GB 8205505**

(43) Date of publication of application:
**07.03.84 Bulletin 84/10**

(45) Publication of the grant of the patent:
**14.01.87 Bulletin 87/03**

(84) Designated Contracting States:
**BE DE FR GB NL**

(56) References cited:
**WO-A-81/00933**
**DE-A-2 521 248**
**FR-A-2 067 503**
**FR-A-2 370 284**
**US-A-3 635 562**

**Rev.Sci.Instrum., vol. 46, no. 9, September
1975 (New York, US), D.E. Bruins et al.: "New
interferometric method for piezoelectric
measurements", pages 1167-1170**

(73) Proprietor: **Kent Scientific Industrial Projects
Limited
The Physics Laboratory The University
Canterbury
Canterbury Kent CT2 7NR (GB)**

(72) Inventor: **JACKSON, David Alfred
8 Woodland Way Canterbury
Kent (GB)**
Inventor: **CORKE, Michael
18 Orchard Close Whitfield Dover
Kent (GB)**
Inventor: **KERSEY, Alan David
17 Oakwood Road Sturry Canterbury
Kent (GB)**

(74) Representative: **Warren, Keith Stanley et al
BARON & WARREN 18 South End Kensington
London W8 5BU (GB)**

Courier Press, Leamington Spa, England.

## Description

The present invention relates to optical displacement sensing apparatus and, more particularly, to such apparatus utilising the principles of a Fabry-Perot interferometer for sensing small vibrations or linear displacements.

The principles of a Fabry-Perot interferometer are well known and its application to the measurement of distances between two planes is well established. However, because of the necessity to use large and heavy optical components and light sources, its practical or industrial use has been limited. Hitherto, known systems of this type e.g., as described in US—A—3635562, have occupied a significant volume and, because of the weight of their components, their dynamic ranges have been limited.

An object of the present invention is to provide a displacement sensing apparatus which is industrially viable and which utilises the high sensitivity of the Fabry-Perot interferometer to achieve improved sensitivity to small displacements. To this end the invention consists in optical displacement sensing apparatus comprising a Fabry-Perot interferometer in which one of the mirrors is resiliently mounted so that the mirrors are relatively movable in response to an external stimulus applied to the interferometer, and servo means responsive to the optical output from the interferometer to adjust an optical parameter, upon relative displacement of the mirrors, in a manner to maintain or restore the optical transmissivity of the interferometer and thereby monitor the displacing stimulus, characterised in that the interiors of the interferometer are confocal mirrors mounted on a body or housing which is adapted to be coupled to the external stimulus to be sensed, said one confocal mirror being resiliently mounted on the body or housing and being arranged to have a relatively large inertia so that said one mirror remains stationary upon application of the external stimulus to the body or housing.

The apparatus according to the invention may be adapted to monitor or measure parameters of any external physical or mechanical stimulus which may affect the light path distance between the two confocal mirrors of the interferometer. It may be used to sense the amplitude of small periodic vibrations, over a wide range of frequencies, and small linear displacements, for example, of the order of 100 microns. Typically, it is suitable for use in accelerometers or pressure measuring devices.

The main advantages of using a confocal Fabry-Perot interferometer over other optical displacement sensors is its very high sensitivity and its immunity from mechanically induced misalignment, which hitherto has limited the use of optical sensors, for example, in accelerometers.

Preferably, the reflective surfaces of the confocal mirrors are formed from dielectric reflective coatings. The latter have a low absorption factor and afford the interferometer a maximum optical transmissivity or transfer function of the order of 99%. The transfer function of the confocal Fabry-Perot interferometer varies very rapidly when the mirror separation is substantially or close to an integral number of quarter wavelengths of the light signal illuminating the interferometer and a variation of approximately 100% in the optically transmitted signal occurs for a 0.5 nanometer change in the mirror separation. For monitoring vibrations, the spacing of the confocal mirrors is preferably set so that, in their rest position, the interferometer has a transfer function of the order of 50%.

In one embodiment of the invention, a piezoelectric element is arranged to move the other mirror relatively to the resiliently mounted mirror, in order to vary the light path distance between the two confocal mirrors, and the servo means is responsive to the optical output from the inteferometer to energise the piezoelectric element so as to maintain a substantially constant spacing between the mirrors.

The resiliently mounted mirror may be supported by a resilient diaphragm attached to the body or housing of the interferometer in which is mounted the other mirror, and this diaphragm is arranged to have a relatively large inertia so that the resiliently mounted mirror remains stationary upon application of the external stimulus to the body.

Conveniently, the apparatus may include an optical fibre for transmitting light from a suitable coherent light source to the optical input of the interferometer. The optical output of the interferometer may be sensed by a photodetector which is arranged to supply a corresponding electrical signal to the servo means. This photodetector may be mounted adjacent the resiliently mounted mirror or, alternatively, the optical output from that mirror may be transmitted to a remote photodetector by an output optical fibre. The use of an optical fibre to introduce the light beam into optical input of the interferometer removes the necessity of having the light or laser source disposed in proximity to the interferometer. Similarly, the use of a second optical fibre to transmit the output of the interferometer, enables the electronic detection components to be removed to a considerable distance from the sensing position.

The servo means may be arranged to compare the optical output of the interferometer with a reference signal derived from the optical input signal so as to produce an output signal which maintains the optical transmissivity of the interferometer. This output signal from the servo means corresponds to one or more of the parameters of the external stimulus and may be supplied to processing means which produce a measurement of such parameter(s).

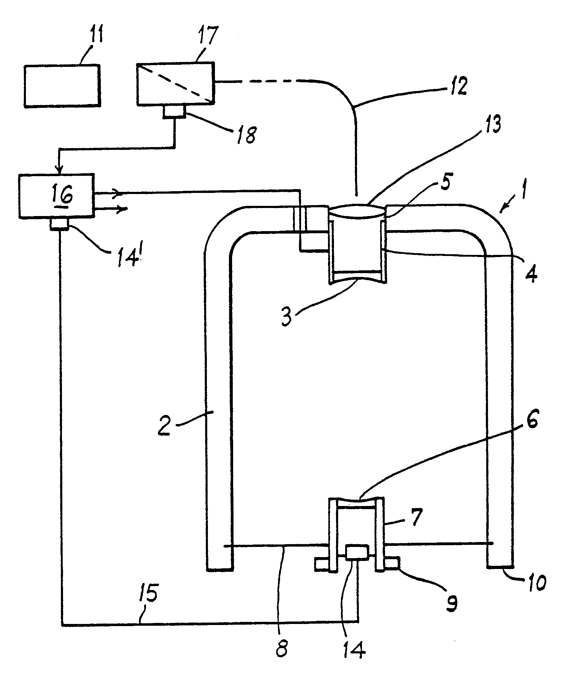

In order that the present invention may be more readily understood, reference will now be made to the accompanying drawing which schematically illustrates an accelerometer constructed in accordance with the invention.

Referring to the drawing, the accelerometer basically comprises a confocal Fabry-Perot interferometer 1 including a body or housing 2 of bell-shaped configuration. The input spherical mirror 3 of the interferometer is disposed at the closed end of the bell-shaped housing 2. It is mounted at the inner end of a cylindrical piezoelectric element 4 for varying the position of the mirror. The opposite end of this piezoelectric element is mounted in an aperture 5 in the closed end of the housing. The output spherical mirror 6 is supported at the inner end of a cylindrical mounting member 7 arranged at the centre of a rigid diaphragm 8 which is attached to the housing 2 adjacent its mouth. The thickness, tension and density of the diaphragm 8 determine the resonance frequency of the accelerometer and can be tailored for any specific application. The diaphragm is positioned so that the reflective surface separation of the two coaxial spherical mirrors 3, 6 is equal to the radius of each mirror which may, for example, be 1 cm. This radius is arranged to be close to an integral number of quarter wavelengths of the light signal illuminating the interferometer. When the reflective surfaces are spaced an intergral number of quarter wavelengths apart, they form an optical resonance cavity which, with reflective surfaces formed from dielectric reflective coatings having 99% reflectivity, afford the interferometer a maximum optical transmissivity of the order of 99%. The spacing of the reflective surfaces of the mirrors is arranged to be fractionally less than an integral number of quarter wavelengths so that, in the rest position of the mirrors, the transmissivity is of the order of 50%.

A large mass 9 is also disposed on the cylindrical mounting member 7. In use, the housing 2 of the interferometer is mechanically coupled, for example, via its end surfaces 10 adjacent the diaphragm 8, to a periodically vibrating test object, the acceleration of whose vibrations is to be measured, and the purpose of the mass 9 is to provide a large amount of inertia for the diaphragm mounted mirror so that, when the housing 2 moves in synchronism with the test object, the mirror 6 remains stationary.

The coherent light source for illuminating the interferometer 1 is a laser light source 11 and, in order to make the accelerometer as versatile as possible, the output beam from this laser light source is coupled to the interferometer via a single mode optical fibre 12. This enables the laser source to be operated at a position remote from the interferometer, for example at distances up to 1 kilometer away from the interferometer. The output from the optical fibre 12 is focussed into the input of the interferometer by a lens 13 disposed in the aperture 5 in the housing 2. The optical signal transmitted by the interferometer is detected at its output by a photodiode 14, 14'. The latter 14 may be mounted in the cylindrical mounting member 7 and supply an electrical signal, via an electrical lead 15, to a remote location or, alternatively, may itself be disposed at the remote location and the output optical signal may be transmitted from the output of the interferometer to the photodiode 14' by an optical fibre 15.

16 is an electronic servo unit. The output of this servo is connected to the piezoelectric element 4, and the servo is responsive to the electrical output signal produced by the photodiode 14, 14' so as to supply a voltage signal to the piezoelectric element which varies the latter's length in a manner such that it opposes the acceleration induced separation of the mirrors 3, 6, that is, the separation of the mirrors is maintained constant or at a main spacing whatever the value of the acceleration of the vibrations sensed by the interferometer. The servo output voltage is produced by comparing the output signal produced by the photodiode 14, 14' and corresponding to the optical signal transmitted through the interferometer, with a reference signal derived from the laser light source 11. Hence, the light beam from the laser is directed into a beam splitter 17 having one output coupled to the optical fibre 12 and its other output detected by a photodiode 18. The signal produced by the photodiode 18 is supplied to the servo 16 which derives therefrom a reference signal corresponding to half the maximum optical signal transmitted by the interferometer 1. This is compared with the signal produced by the photodiode 14, 14' to produce the voltage signal controlling the piezoelectric element 4. The resulting voltage output signal from the servo 16 is directly proportional to the acceleration of the periodic vibrations being sensed and can be processed to compute this acceleration.

With the above described accelerometer, only the interferometer 1 is required to be coupled to or mounted on the test object and the laser source 11 and control and measuring components 11, 16, 17 can be disposed at a remote location. The interferometer can be of compact construction with a high sensitivity and large dynamic range. For example, it has been found that a sensitivity of $10^{-9}$ g can be achieved with a dynamic range of six orders of magnitude. Alternatively, other configurations are possible which will enable it to operate with a lower absolute sensitivity, the dynamic range remaining constant. The design of the apparatus is such that it can be readily incorporated into a triple axis accelerometer.

Whilst a particular embodiment has been described, it will be understood that modifications can be made without departing from the scope of the invention as defined by the appended claims.

**Claims**

1. Optical displacement sensing apparatus comprising a Fabry-Perot interferometer (1) in which one (6) of the mirrors is resiliently mounted so that the mirrors (3, 6) are relatively movable in response to an external stimulus applied to the interferometer (1), and servo means (16) responsive to the optical output from the interferometer to adjust an optical parameter, upon relative displacement of the mirrors, in a manner to maintain or restore the optical transmissivity of the interferometer and thereby monitor the displacing stimulus, characterised in that the mirrors of the interferometer (1) are confocal mirrors (3, 6) mounted on a body or housing (2) which is adapted to be coupled to the external stimulus to be sensed, said one confocal mirror (6) being resiliently mounted on the body or housing and being arranged to have a relatively large inertia so that said one mirror remains stationary upon application of the external stimulus to the body or housing (2).

2. Apparatus according to claim 1, characterised in that said other mirror (3) is mounted on the body or housing by a piezoelectric element (4) which is arranged to move the other mirror relatively to said one mirror (6) in order to vary the light path distance between the two confocal mirrors, said servo means (16) being responsive to the optical output of the interferometer (1) to energise the piezoelectric element (4) so as to maintain a substantially constant spacing between the mirrors.

3. Apparatus according to claim 1 or 2, characterised in that said one mirror (6) is supported by a resilient diaphragm (8) attached to the body or housing (2).

4. Apparatus according to claim 1, 2 or 3, characterised by a single mode optical fibre (12) for transmitting light from a light source to the optical input of the interferometer (1).

5. Apparatus according to any preceding claim, characterised in that the optical output of the interferometer is detected by a photodetector (14, 14') which is arranged to supply an electrical signal, corresponding to the optical output, to the servo means (16).

6. Apparatus according to claim 5, characterised in that the optical output from the interferometer is supplied to the photodetector (14') by an output optical fibre (15).

7. Apparatus according to any preceding claim, characterised in that the servo means (16) is arranged to compare the optical output of the interferometer (1) with a reference signal derived from the optical input signal and thereby produce a servo output signal for maintaining the optical transmissivity of the interferometer, said servo output signal also being supplied to processing means for producing a measurement of a parameter of the external stimulus.

8. Apparatus according to any preceding claim, characterised in that, in the rest condition, the separation of the reflective surfaces of the confocal mirrors (3, 6) is equal to the radius of each reflective surface, which radius is fractionally less than an integral number of quarter wavelengths of the light signal illuminating the interferometer.

**Patentansprüche**

1. Optischer Verschiebungsfühler aus einem Fabry-Perot-Interferometer, bei dem einer (6) der Spiegel elastisch so montiert ist, daß die Spiegel als Reaktion auf eine äußere Anregung relativ beweglich sind, welche Anregung auf das Interferometer ausgeübt wird, und aus Servomitteln (16), die auf den optischen Ausgang des Interferometers ansprechen, um einen optischen Parameter einzustellen und zwar nach relativer Verschiebung der Spiegel derart, um die optische Durchlässigkeit des Interferometers beizubehalten oder wieder herzustellen und dadurch die Verschiebeanregung zu überwachen, dadurch gekennzeichnet, daß die Spiegel des Interferometers (1) konfokale Spiegel (3, 6) sind, die auf einem Körper oder Gehäuse (2) montiert sind, welches angepaßt ist, um an die äußere, zu fühlende Anregung gekoppelt zu werden, wobei ein konfokaler Spiegel (6) elastisch auf dem Körper oder dem Gehäuse montiert ist und angeordnet ist, um eine verhältnismäßig große Trägheit zu haben, so daß der erwähnte eine Spiegel nach Anwendung der äußeren Anregung auf den Körper oder das Gehäuse (2) stationär bleibt.

2. Vorrichtung nach Anspruch 1, dadurch gekennzeichnet, daß der erwähnte zweite Spiegel (3) auf dem Körper oder dem Gehäuse durch ein piezoelektrisches Element (4) montiert ist, welches vorgesehen ist, um den anderen Spiegel relativ zum erwähnten Spiegel (6) zu bewegen, um den Lichtwegabstand zwischen den beiden konfokalen Spiegeln zu variieren, wobei die Servomittel (16) auf den optischen Ausgang des Interferometers (1) ansprechen, um das piezoelektrische Element (4) zu betreiben, um einen im wesentlichen konstanten Abstand zwischen den Spiegeln beizubehalten.

3. Vorrichtung nach Anspruch 1 oder 2, dadurch gekennzeichnet, daß der eine Spiegel (6) von einer elastischen Membran (8) abgestützt ist, welche an dem Körper oder dem Gehäuse (2) befestigt ist.

4. Vorrichtung nach einem der Ansprüche 1 bis 3, gekennzeichnet durch eine monomode optische Faser (12) zur Lichtübertragung aus einer Lichtquelle zum optischen Eingang des Interferometers (1).

5. Vorrichtung nach einem der vorherigen Ansprüche, dadurch gekennzeichnet, daß der optische Ausgang des Interferometers durch einen Fotodetektor (14, 14') ermittelt wird, der angeordnet ist, um ein elektrisches Signal entsprechend dem optischen Ausgang den Servomitteln (16) zuzuführen.

6. Vorrichtung nach Anspruch 5, dadurch gekennzeichnet, daß der optische Ausgang des Interferometers dem Fotodetektor (14') durch eine ausgangs-optische Faser (15) zugeführt wird.

7. Vorrichtung nach einem der vorherigen Ansprüche, dadurch gekennzeichnet, daß das Servomittel (16) angeordnet ist, um den optischen Ausgang des Interferometers (1) mit einem Bezugssignal zu vergleichen, welches von dem optischen Eingangssignal abgeleitet ist und um dadurch ein Servo-Ausgangssignal zu erzeugen, um die optische Durchlässigkeit des Interferometers aufrechtzuerhalten, wobei das Servo-Ausgangs-

signal auch Verarbeitungsmitteln zugeführt wird, um eine Messung eines Parameters der äußeren Anregung zu erzeugen.

8. Vorrichtung nach einem der vorherigen Ansprüche, dadurch gekennzeichnet, daß im Ruhezustand der Abstand der reflektierenden Flächen der Fokalspiegel (3, 6) gleich dem Radius jeder reflektierenden Fläche ist, welcher Radius fraktioniert geringer ist als eine ganze Zahl einer Viertelwellenlänge des Lichtsignals, welches das Interferometer beleuchtet.

## Revendications

1. Dispositif optique de détection de déplacement comprenant un interféromètre de FABRY-PEROT (1) dans lequel l'un (6) des miroirs est monté élastiquement de façon que les miroirs (3, 6) peuvent être déplacés l'un par rapport à l'autre en réponse à une sollicitation externe appliquée sur l'interféromètre (1), et des moyens d'asservissement (16) commandés par la sortie optique de l'interféromètre pour ajuster un paramètre optique, en fonction du déplacement relatif des miroirs, de façon à maintenir ou rétablir la transmittance optique de l'interféromètre et ainsi commander la sollicitation de déplacement, caractérisé en ce que les miroirs de l'interféromètre (1) sont des miroirs confocaux (3, 6) montés sur un corps ou logement (2) qui est adapté pour être couplé à la sollicitation externe à détecter, l'un desdits miroirs confocaux (6) étant monté élastiquement sur le corps ou logement et étant disposé pour avoir une inertie relativement importante de telle sorte que ledit miroir reste immobile lors de l'application de la sollicitation externe sur le corps ou logement (2).

2. Dispositif selon la revendication 1, caractérisé en ce que ledit autre miroir (3) est monté sur le corps ou logement par l'intermédiaire d'un élément piézo-électrique (4) qui est adapté pour déplacer l'autre miroir par rapport audit premier miroir (6) de façon à modifier la distance du trajet lumineux entre les deux miroirs confocaux, lesdits moyens d'asservissement (16) étant commandés par la sortie optique de l'interféromètre (1) pour alimenter l'élément piézoélectrique (4) de façon à maintenir un écartement sensiblement constant entre les miroirs.

3. Dispositif selon l'une des revendications 1 ou 2, caractérisé en ce que ledit premier miroir (6) est supporté par un diaphragme élastique (8) fixé au corps ou logement (2).

4. Dispositif selon l'une des revendications 1, 2 ou 3, caractérisé en ce qu'une fibre optique à mode unique (12) transmet la lumière depuis la source lumineuse jusqu'à l'entrée optique de l'interféromètre (1).

5. Dispositif selon l'une quelconque des revendications précédentes, caractérisé en ce que la sortie optique de l'interféromètre est détectée par un photodétecteur (14, 14') qui est adapté pour fournir un signal électrique aux moyens d'asservissement (16) en réponse à la sortie optique.

6. Dispositif selon la revendication 5, caractérisé en ce que la sortie optique de l'interféromètre est transmise au photodétecteur (14') par une fibre optique de sortie (15).

7. Dispositif selon l'une quelconque des revendications précédentes, caractérisé en ce que les moyens d'asservissement (16) sont adaptés pour comparer la sortie optique de l'interféromètre (1) avec un signal de référence dérivé du signal optique d'entrée, produisant ainsi un signal de sortie d'asservissement pour maintenir la transmittance optique de l'interféromètre, ledit signal de sortie d'asservissement étant également envoyé à des moyens de traitement pour produire la mesure d'un paramètre de la sollicitation externe.

8. Dispositif selon l'une quelconque des revendications précédentes, caractérisé en ce que, au repos, l'écartement entre les surfaces réflectrices des miroirs confocaux (3, 6) est égal au rayon de chaque surface réflectrice, ledit rayon étant une fraction d'un nombre entier de quarts de longueur d'onde du signal lumineux illuminant l'interféromètre.